# EUROPÄISCHE PATENTANMELDUNG

(11) **EP 4 589 792 A1**
(43) Veröffentlichungstag der Anmeldung: **23.07.2025**
(21) Anmeldenummer: 24152483.4
(22) Anmeldetag: 17.01.2024
(51) Int. Cl.: H02G 3/06, H02G 15/013

(54) **KABELVERSCHRAUBUNG**

(71) Anmelder: Lapp Engineering AG, 6330 Cham (CH)
(72) Erfinder: MÜLLER, Daniel, 71686 Remseck (DE)
(74) Vertreter: Rutz & Partner

(57) **Zusammenfassung**

Die Kabelverschraubung (1), die eine Durchführungsachse (x) aufweist und die zur Durchführung eines Kabels (8) entlang der Durchführungsachse (x) durch eine Öffnung in einer Montagewand (9), insbesondere einer Gehäusewand eines elektrischen Geräts oder eines elektrischen Schranks vorgesehen ist, umfasst
- einen Montagestutzen (12), der mit der Montagewand (9) verbindbar ist, der ein mit einem ersten Aussengewinde (1212) versehenes erstes Anschlussteil (121) und einen der Durchführung des Kabels (8) dienenden Stutzenkanal (120) umfasst,
- eine Hutmutter (11), die ein Innengewinde (112) und einen der Durchführung des Kabels (8) dienenden Hutkanal (110) aufweist und die auf den Montagestutzen (12) aufschraubbar ist, und
- ein komprimierbares Dichtungselement (13), das einen der Durchführung des Kabels (8) dienenden Dichtungskanal (130), ein Oberteil (131), das nach oben in den Hutkanal (110) hineinragt, und ein Unterteil (133), das nach unten in den Stutzenkanal (120) hineinragt, umfasst.

Erfindungsgemäss ist im Stutzenkanal (120) wenigstens ein Stützelement (124) vorgesehen, von dem ein scheibenförmiges oder ringförmiges Lagerelement (14) lösbar gehalten ist, das einen der Durchführung des Kabels (8) dienenden Lagerkanal (140) aufweist und auf dem das Unterteil (133) des Dichtungselements (13) sitzt.

## Beschreibung

Die Erfindung betrifft eine Kabelverschraubung zur abgedichteten Durchführung eines Kabels durch eine Montageöffnung in einer Montagewand sowie ein Dichtungselement für eine solche Kabelverschraubung.

Kabelverschraubungen oder Kabeldurchführungen erlauben es, Kabel durch Wände und Gehäuse von elektrischen Schaltschränken, elektrischen Geräten und dergleichen hindurchzuführen. Zweck der Kabelverschraubung ist die Vermeidung von Beschädigungen des Kabels im Bereich der Durchführung sowie die zug- und druckfeste Befestigung des Kabels bezüglich der Montagewand. Zudem gewährleistet die Kabelverschraubung je nach situationsbedingten Anforderungen eine staub-/gas-/flüssigkeitsdichte Durchführung des Kabels.

Die EP2688169A1 offenbart eine Kabelverschraubung mit einer Montageeinheit, einer Kabelfixiereinheit mit einem Lamellenkorb, der kreisförmig angeordnete Lamellen umfasst, einer Ringdichtung, die von den Lamellen umschlossen ist, und mit einer Hutmutter, die mit der Kabelfixiereinheit verschraubbar ist. Durch die Hutmutter ist der Lamellenkorb in Richtung eines durch die Kabeldurchführung hindurchlaufenden Kabels derart beaufschlagbar, dass die Lamellen gegen die Ringdichtung gedrückt werden und die Ringdichtung gegen das Kabel gepresst wird und dieses abdichtend umschliesst und mechanisch fixiert.

Bei Kabelverschraubungen dieser Art ist sicherzustellen, dass ein flüssiges oder gasförmiges Medium auch nicht über die Aussenseite des Lamellenkorbs durch die Kabelverschraubung hindurch treten kann.

Kabelverschraubungen mit einem Lamellenkorb sind zudem oft nicht halogenfrei und bei Anwendungen, bei denen höhere Temperaturen auftreten oder bei denen Brandschutzbestimmungen dies verbieten, nicht einsetzbar.

Die EP3301770A1 offenbart eine Kabelverschraubung zur Durchführung eines Kabels durch eine Montageöffnung, mit einem hohlzylinderförmigen Montagestutzen, der einen der Durchführung des Kabels dienenden Stutzenkanal und ein Aussengewinde aufweist, auf das eine Hutmutter aufsetzbar ist, die ein Innengewinde und eine der Durchführung des Kabels dienende Durchführungsöffnung aufweist. Ferner ist ein elastisches Dichtungselement vorgesehen, das mit einem Oberteil in einem Hutkanal der Hutmutter und mit einem Unterteil in einem Stutzenkanal des Montagestutzens gehalten ist, und das einen Dichtungskanal zur Durchführung des Kabels aufweist. Der Montagestutzen umfasst in einem Endbereich, welcher der Hutmutter zugewandt ist, ferner eine konische Abstützfläche, an der eine Druckfläche des Dichtungselements anliegt.

Damit das Dichtungselement sicher gehalten wird, ist die Abstützfläche relativ gross zu wählen und möglichst präzise an die Druckfläche des Dichtungselements anzupassen. Sofern die Abstützfläche zu klein ist, wird Material des Dichtungselements möglicherweise entlang dem Kabel und nicht gegen das Kabel verschoben, weshalb eine ungenügende Abdichtung und eine ungenügende Fixierung des eingelegten Kabels resultieren können. Sofern die Abstützfläche hingegen relativ gross ist, um möglichst viele unterschiedliche Dichtungselemente abstützen zu können, so reduziert sich der Durchmesser des Stutzenkanals und somit der maximale Durchmesser der zu installierenden Kabel.

Aufgrund der notwendigen Anpassung des Montagestutzens an das Dichtungselement oder des Dichtungselements an den Montagestutzen ist diese Kabelverschraubung nur in einem beschränkten Anwendungsbereich einsetzbar. Es sind nur Dichtungselemente mit ähnlichen Abmessungen einsetzbar, weshalb für Dichtungselemente mit wesentlich anderen Abmessungen ein anderer Montagestutzen erforderlich ist.

Sofern das Dichtungselement nicht optimal an ein zu installiertes Kabel angepasst werden kann und beispielsweise einen zu weiten Dichtungskanal aufweist, kann ein dichtes Anliegen an Kabel nur erzielt werden, wenn die Hutmutter vollständig angezogen wird. In diesem Fall ist die Bedienung der Kabelverschraubung nicht komfortabel.

Der Erfindung liegt daher die Aufgabe zu Grunde, eine verbesserte Kabelverschraubung zu schaffen.

Insbesondere ist eine Kabelverschraubung zu schaffen, die sowohl hinsichtlich geltender Brandschutzbestimmungen und Materialanforderungen als auch hinsichtlich der Eigenschaften der zu installierenden Kabel in einem weiten Bereich einsetzbar ist.

Es sollen Kabel mit kleinem und grossen Kabeldurchmesser installierbar sein. Der Kabeldurchmesser soll durch die Ausgestaltung des Montagestutzens kaum beschränkt werden.

Die Kabelverschraubung soll zudem bequem bedienbar sein und die abgedichtete Durchführung und Fixierung zu installierender Kabel sicher gewährleisten.

Es sollen Dichtungselemente einsetzbar sein, die selektiv an die zu installierenden Kabel angepasst sind und die sich in den Abmessungen wesentlich unterscheiden können.

Die Kabelverschraubung soll vorzugsweise derart ausgelegt sein, dass eine Verdrillung des Kabels beim Installationsvorgang vermieden wird.

Diese Aufgabe wird mit einer Kabelverschraubung nach Anspruch 1 und einem Dichtungselement nach Anspruch 15 gelöst. Vorteilhafte Ausgestaltungen der Erfindung sind in weiteren Ansprüchen angegeben.

Die Kabelverschraubung, die eine Durchführungsachse aufweist und die zur Durchführung eines Kabels oder einer Leitung entlang der Durchführungsachse durch eine Öffnung in einer Montagewand, insbesondere einer Gehäusewand eines elektrischen Geräts oder eines elektrischen Schranks vorgesehen ist, umfasst
- einen vorzugsweise hohlzylinderförmigen Montagestutzen, der mit der Montagewand verbindbar ist, der ein mit einem ersten Aussengewinde versehenes erstes Anschlussteil und einen der Durchführung des Kabels dienenden Stutzenkanal umfasst,
- eine Hutmutter, die ein Innengewinde und einen der Durchführung des Kabels dienenden Hutkanal aufweist und die auf den Montagestutzen aufschraubbar ist, und
- ein komprimierbares Dichtungselement, das einen der Durchführung des Kabels dienenden Dichtungskanal, ein Oberteil, das nach oben in den Hutkanal hineinragt, und ein Unterteil, das nach unten in den Stutzenkanal hineinragt, umfasst.

Erfindungsgemäss ist im Stutzenkanal wenigstens ein Stützelement vorgesehen, von dem ein scheibenförmiges und/oder ringförmiges Lagerelement lösbar gehalten ist, das einen der Durchführung des Kabels oder der Leitung dienenden vorzugsweise zylindrischen Lagerkanal aufweist und auf dem das Unterteil des Dichtungselements sitzt.

Das Dichtungselement, das vorzugsweise zumindest annähernd rotationssymmetrisch ausgebildet ist, ist durch Anziehen der Hutmutter zwischen der Hutmutter und dem Lagerelement komprimierbar, sodass es auf der Innenseite dicht abschliessend an einem eingelegten Kabel oder einer eingelegten Leitung anliegt und diese vorzugsweise fixiert. Mit der Aussenseite liegt das Dichtungselement nach dem Festziehen der Hutmutter dicht abschliessend an den Kanalwänden des Hutkanals und des Stutzenkanals an. Die Kabelverschraubung ist nach der Installation eines Kabels daher dicht abgeschlossen.

Das Dichtungselement weist an dem der Hutmutter zugewandten Ende des Oberteils eine obere Kontaktfläche, die an einer sich nach aussen verjüngenden Druckfläche des Hutkanals anliegt, und an dem dem Montagestutzen zugewandten Ende des Unterteils eine untere Kontaktfläche, die am Lagerelement anliegt, auf. Das Dichtungselement wird daher zwischen der Hutmutter und dem Lagerelement gehalten und komprimiert.

Das Dichtungselement kann nach Bedarf aus Materialien gefertigt werden, die den Anforderungen des Anwenders und den Brandschutzvorschriften entsprechen. Beispielsweise ist das Dichtungselement aus Silikon, Kautschuk, Gummi, einem Elastomermaterial, einem thermoplastischen Elastomermaterial oder einem elastischen Kunststoffmaterial gefertigt.

In die Kabelverschraubung sind unterschiedliche Dichtungselemente einsetzbar, die einen Dichtungskanal mit einem Durchmesser aufweisen, der selektiv an den Durchmesser des Kabels oder der Leitung angepasst ist.

In vorzugsweisen Ausgestaltungen ist eine Dichtungselement mit einem Dichtungskanal vorgesehen, dessen Durchmesser wahlweise an den Durchmesser des Kabels oder der Leitung anpassbar ist.

Für jedes der einsetzbaren Dichtungselemente, die an den Kabeldurchmesser angepasst sind, oder für das Dichtungselement mit dem Dichtungskanal, dessen Durchmesser selektiv an den Kabeldurchmesser angepasst wurde, kann ein entsprechendes Lagerelement in die Kabelverschraubung eingesetzt werden.

Das im Stutzenkanal vorgesehene wenigstens eine Stützelement, das an der Wand des Stützenkanals angeformt oder befestigt ist, kann daher sehr klein gewählt werden und muss nicht an das elastische Dichtungselement angepasst werden. Stattdessen dient das Stützelement allein dem Halten des eingesetzten Lagerelements, das im Vergleich zum Dichtungselement eine wesentlich höhere Festigkeit aufweist. Das Lagerelement kann daher von einem sehr kleinen und schmalen Stützelement oder sehr kleinen Stützelementen gehalten werden kann, die den maximalen Kabeldurchmesser kaum reduzieren und die zum direkten Halten des Dichtungsteils nicht geeignet sind.

Das Lagerelement ist beispielsweise aus Metall oder einem thermoplastischen Kunststoff, vorzugsweise Polyethylen PE, Polyoxymethylene POM, oder einem Polyamid, wie PA6, gefertigt.

Beispielsweise ist das Stützelement eine in den Stutzenkanal hineinragende einteilige oder mehrteilige ringförmige Schulter, auf die das Lagerelement aufgelegt wird. Zum Halten des Lagerelements, das im Bereich zum Dichtungselement eine hohe Festigkeit aufweist, genügt ein relativ geringer Vorsprung der Schulter beispielsweise mit einer Breite in einem Bereich von 0.25 mm - 1 mm.

Der Stutzenkanal kann alternativ auch ein Innengewinde aufweisen, in das ein mit einem Aussengewinde versehenes Stützelement, beispielsweise ein Ring oder eine Hülse, eindrehbar ist.

In einer weiteren vorzugsweisen Ausgestaltung weist der Stutzenkanal ein Innengewinde auf, welches selbst das Stützelement bildet und das mit einem Aussengewinde versehene Lagerelement hält.

In diesen Ausgestaltungen kann entweder das mit einem Aussengewinde versehene Stützelement oder das mit einem Aussengewinde versehene Lagerelement durch Drehung entlang der Durchführungsachse verschoben und dadurch an ein eingesetztes Dichtungselement, insbesondere an dessen Länge, angepasst werden. Das Lagerelement wird entlang der Durchführungsachse vorzugsweise so weit verschoben werden, dass die Hutmutter in einem gewünschten Arbeitsbereich betätigt werden kann und nicht vollständig bis nahe an einen Anschlag gedreht werden muss, um das Dichtungselement bedarfsweise zu komprimieren.

Der Aussendurchmesser des Lagerelements entspricht vorzugsweise zumindest annähernd dem Durchmesser des Stutzenkanals. Der Durchmesser des Lagerkanals des Lagerelements entspricht vorzugsweise zumindest annähernd dem Durchmesser des Dichtungskanals des Dichtungselements.

Vorzugsweise umfasst jede Kabelverschraubung wenigstens zwei Lagerelemente, die Lagerkanäle mit unterschiedlichen Durchmessern aufweisen, und von denen eines, das zum gewählten Dichtungselement am besten passt, im Montagestutzen auf das wenigstens eine Stützelement aufgesetzt oder mit diesem verbunden wird.

In einer weiteren bevorzugten Ausgestaltung wird ein Lagerelement vorgesehen, das wenigstens eine konzentrisch zur Durchführungsachse verlaufende Sollbruchlinie aufweist, entlang der ein ringförmiges Lagersegment des Lagerelements abtrennbar ist und der Durchmesser des Lagerkanals entsprechend vergrösserbar ist. Bei Bedarf wird die Sollbruchlinie oder eine der Sollbruchlinien aufgebrochen und das Lagerelement entsprechend an das Dichtungselement angepasst.

In vorteilhaften Ausgestaltungen ist das Lagerelement mit dem zugehörigen Dichtungselement fest verbunden, sodass der Zusammenbau der Kabelverschraubung vereinfacht wird. Das Lagersegment, das zusammen mit dem Dichtungselement eingesetzt wird, kann beispielsweise mittels eines Klebstoffs mit dem Dichtungselement verbunden werden.

In vorzugsweisen Ausgestaltungen ist das wenigstens eine Stützelement als Rastelement ausgebildet, so dass das eingesetzte Lagerelement einrasten kann und sicher gehalten wird. Beispielsweise sind Rastnasen über dem wenigstens einen Stützelement vorgesehen, über die das Lagerelement geführt wird, bevor es auf das wenigstens eine Stützelement trifft.

In vorzugsweisen Ausgestaltungen umfasst das Dichtungselement wenigstens ein lösbar gehaltenes Rohrsegment, das den Dichtungskanal umschliesst. Nach Entfernen des betreffenden Rohrsegments vergrössert sich der Dichtungskanal entsprechend bis zum nächsten Segment oder bis zum Grundkörper des Dichtungselements.

Vorzugsweise ist das wenigstens eine Rohrsegment durch wenigstens eine Sollbruchstelle einstückig mit dem Oberteil und/oder mit dem Unterteil verbunden und durch einen zylindrischen Einschnitt vom Oberteil und/oder vom Unterteil getrennt. Das Dichtungselement umfasst das Rohrsegment oder die Rostelemente daher vorzugsweise in einem Stück.

In einer weiteren vorzugsweisen Ausgestaltung ist vorgesehen, dass das wenigstens eine Rohrsegment durch mechanische Verbindungsmittel, wie ein Gewinde oder weitere formschlüssig ineinander eingreifende Formteile, mit dem Dichtungselement verbunden ist. Das Dichtungselement umfasst beispielsweise einen Dichtungskanal mit einem Innengewinde, in den das mit einem Aussengewinde versehene Rohrsegment, das seinerseits einen Dichtungskanal mit einem kleineren Durchmesser umschliesst, eingedreht ist. Das Rohrsegment kann daher in einfacher Weise in das Dichtungselement eingedreht und von diesem durch Drehung wieder gelöst werden. Durch die Schraubverbindung zwischen dem Rohrsegments und dem Dichtungselement wird verhindert, dass das Rohrsegment beim Einführen des Kabels ausgestossen wird. Das Rohrsegment und der Grundkörper des Dichtungselements, der nach dem Entfernen des Rohrsegments verbleibt, sind vorzugsweise aus demselben Material gefertigt.

In einer weiteren vorzugsweisen Ausgestaltung ist vorgesehen, dass das wenigstens eine Rohrsegment durch Haftstoffe oder Klebstoffe mit dem Dichtungselement verbunden ist.

Vorzugsweise ist das Rohrsegment mit einem Halteelement verbunden, welches erlaubt, dieses manuell vom Dichtungselement zu trennen.

Das lösbar gehaltene Rohrsegment erstreckt sich über die gesamte Länge oder nur über einen Teil der Länge des Dichtungselements. Beispielsweise erstreckt sich das Rohrsegment über die Länge des Oberteils oder des Unterteils oder einen Teil davon oder auch weiter über das Übergangsteil oder einen Teil davon.

Damit das Rohrsegment besonders einfach vom Dichtungselement gelöst werden kann, wird anschliessend an die Sollbruchstelle vorzugsweise eine nach aussen freiliegende Arbeitsnut vorgesehen, die eine Sollbruchlinie bildet. Durch einen Eingriff mit einem Werkzeug entlang der Sollbruchlinie kann das Rohrsegment in einfacher Weise vom Dichtungselement gelöst werden.

Die Fertigung des Dichtungselements mit einem oder mehreren Rohrsegmenten kann in einfacher Weise erfolgen, indem von einer Seite wenigstens ein zylindrischer Einschnitt koaxial zur Durchführungsachse in das Dichtungselement eingearbeitet und von der anderen Seite vorzugsweise die Sollbruchlinie oder Arbeitsnut eingearbeitet wird.

Sofern wenigstens ein Rohrsegment vom Dichtungselement trennbar oder lösbar ist, wird vorzugsweise ein Lagerelement mit wenigstens einer Sollbruchlinie vorgesehen, die zur Umfangslinie oder zum Aussendurchmesser des wenigsten einen lösbaren Rohrsegments korrespondiert. Durch Auftrennen der wenigstens einen Sollbruchlinie kann ein entsprechendes typischerweise ringförmiges Lagersegment vom Lagerelement gelöst und der Durchmesser des Lagerkanals entsprechend vergrössert werden.

Sofern ein Kabel mit grösserem Kabeldurchmesser zu installieren und der Durchmesser des Dichtungskanals entsprechend zu vergrössern ist, wird daher das Rohrsegment oder, falls mehrere lösbare Rohrsegmente vorgesehen sind, werden eines oder mehrere Rohrsegmente vom Dichtungselement und das entsprechende Lagersegment vom Lagerelement abgetrennt. Auch bei dieser Lösung kann das Lagerelement vorteilhaft mit dem Dichtungselement verbunden werden.

In vorzugsweisen Ausgestaltungen ist vorgesehen, dass das Unterteil des Dichtungselements an der Aussenseite mit wenigstens einem ersten Formelement, vorzugsweise einer Aufnahmenut oder einer Rippe, versehen ist, die vorzugsweise formschlüssig zu einem zweiten Formelement korrespondiert, das an der Innenseite des Stutzenkanals vorgesehen ist. Das in den Stutzenkanal eingesetzte Dichtungselement wird daher nichtdrehbar gehalten, sodass eine Verdrillung des eingelegten Kabels und eine Torsion des gegebenenfalls vorgesehenen Rohrsegments beim Anziehen der Hutmutter vermieden wird.

Das Dichtungselement kann in unterschiedlichen Ausgestaltungen vorliegen und einen Dichtungskanal mit einem beliebigen an ein eingelegtes Kabel oder an eine eingelegte Leitung angepassten Kanalquerschnitt aufweisen.

Vorzugsweise weist das Oberteil einen grösseren Aussendurchmesser auf als das Unterteil des Dichtungselements, wobei das Oberteil und das Unterteil durch ein Übergangsteil, welches sich vom Oberteil zum Unterteil entlang einer Geraden oder einer Kurve verjüngt, miteinander verbunden sind.

In einer weiteren vorzugsweisen Ausgestaltung wird das Lagerelement genutzt, um Kontaktelemente aufzunehmen, die gegen die Durchführungsachse gerichtet sind und ein eingelegtes Kabel kontaktieren können. Vorzugsweise ist vorgesehen, dass das Lagerelement eine gegen die Durchführungsachse geöffneten Innennut aufweist, in die ein elastischer Haltering einsetzbar ist, der Kontaktelemente hält. Die Kontaktelemente sind vorzugsweise U-förmig ausgebildet, sodass sie den Haltering einseitig umschliessen und mit Kontaktarmen gegen die Durchführungsachse ausgerichtet sind.

Die Kabelverschraubung kann für die Installation von beliebigen Kabeln und Medienleitungen, wie Flachbandkabel, Rundleiter oder Rohre eingesetzt werden. Die Lagerelemente sind bedarfsweise an den Querschnitt des Dichtungselements anzupassen.

Nachfolgend wird die Erfindung anhand von Zeichnungen näher erläutert. Dabei zeigt:
- Fig. 1a: eine mit einer Montagewand 9 verbundene erfindungsgemässe Kabelverschraubung 1 mit einem Montagestutzen 12, mit einer mit dem Montagestutzen 12 verschraubten Hutmutter 11 und mit einem installierten Kabel 8, das entlang einer Durchführungsachse x durch die Kabelverschraubung 1 und die Montagewand 9 hindurchgeführt ist;
- Fig. 1b: die Kabelverschraubung 1 von Fig. 1a mit einem Viertelschnitt mit einem Dichtungselement 13, das einen Dichtungskanal 130 aufweist und das einerseits mit einem Oberteil 131 in einen Hutkanal 110 der Hutmutter 11 und andererseits mit einem Unterteil 133 in einen Stutzenkanal 120 des Montagestutzens 12 hineinragt und das auf einem ringförmigen Lagerelement 14 sitzt, das von einem Stützelement 124 gehalten ist, welches ringförmig entlang der Kanalwand des Stutzenkanals 22 verläuft;
- Fig. 2: die Kabelverschraubung von Fig. 1b mit einem vorzugsweise ausgestalteten Lagerelement 14, das eine Kontaktierungsvorrichtung 15 mit einer Vielzahl von Kontaktelementen 151 hält, die mit Kontaktarmen gegen die Durchführungsachse x weisen;
- Fig. 3: die Kabelverschraubung 1 von Fig. 1b in Explosionsdarstellung;
- Fig. 4: die Kabelverschraubung 1 von Fig. 2 in Explosionsdarstellung; und
- Fig. 5: das Dichtungselement 13 von Fig. 3 oder Fig. 4 in einer vorzugsweisen Ausgestaltung mit einem lösbar gehaltenen Rohrsegment 139, das den Dichtungskanal 130 umschliesst und das abtrennbar ist, um den Durchmesser des Dichtungskanals 130 zu vergrössern.

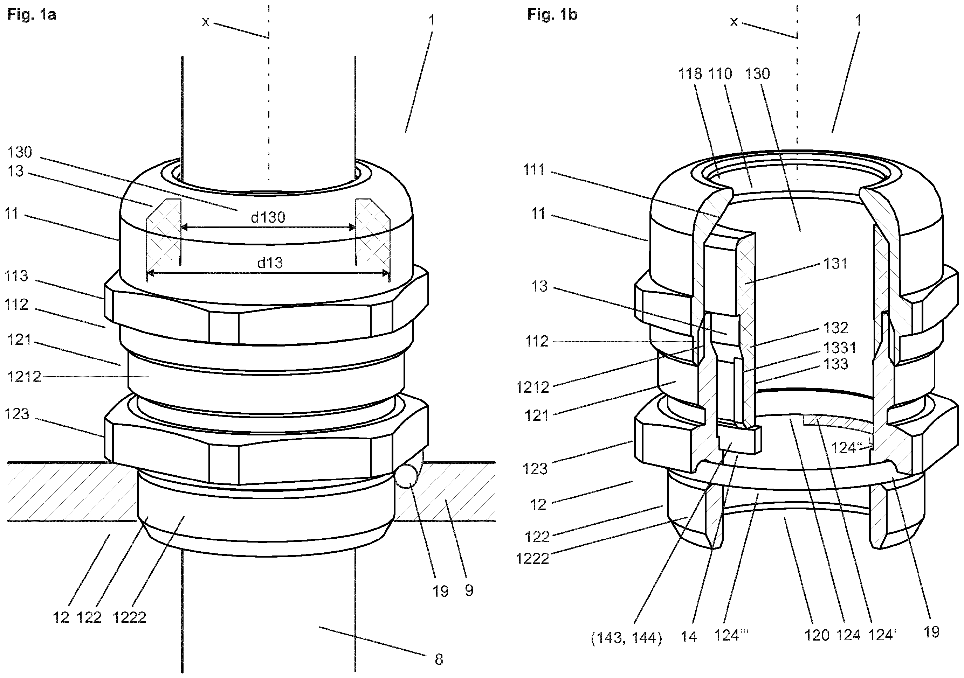

Fig. 1a zeigt eine mit einer Montagewand 9 verbundene erfindungsgemässe Kabelverschraubung 1 mit einem Montagestutzen 12, mit einer mit dem Montagestutzen 12 verschraubten Hutmutter 11 und mit einem installierten Kabel 8, das entlang einer Durchführungsachse x durch die Kabelverschraubung 1 und die Montagewand 9 hindurchgeführt ist.

Der vorzugsweise hohlzylindrische Montagestutzen 12 umfasst ein der Hutmutter 11 zugewandtes erstes Anschlussteil 121 mit einem ersten Aussengewinde 1212, ein zur Durchführung durch die Montagewand 9 vorgesehenes zweites Anschlussteil 122 mit einem zweiten Aussengewinde 1222, und dazwischen einen Montageflansch 123 mit Werkzeugangriffsflächen. Das zweite Anschlussteil 122 wurde in ein in der Montagewand 9 vorgesehenes Gewinde so weit eingedreht, bis ein vom Montageflansch 123 gehaltener Dichtungsring 19 mit einer gewünschten Andruckkraft an der Montagewand 9 dicht abschliessend anliegt (siehe auch Fig. 1b).

Die Hutmutter 11 umfasst aussenliegende Werkzeugangriffselemente 113 und ein Innengewinde 112 (siehe Fig. 1b), das mit dem ersten Aussengewinde 1212 des ersten Anschlussteils 121 des Montagestutzens 12 verschraubt ist. Die Hutmutter 11 kann mittels eines Werkzeugs festgezogen werden, um ein innerhalb der Kabelverschraubung 1 vorgesehenes Dichtungsteil 13 (in Fig. 1 symbolisch gezeigt), das zur Durchführung des Kabels 8 einen Dichtungskanal 130 aufweist, in Richtung der Durchführungsachse x zu komprimieren. Bei diesem Vorgang wird einerseits der Durchmesser d130 des Dichtungskanals 130 reduziert und das Dichtungsteil 13 an das eingelegte Kabel 8 dicht abschliessend angepresst, und andererseits der Aussendurchmesser d13 des Dichtungsteils 13 vergrössert und das Dichtungsteil 13 dicht abschliessend an die Innenseiten der Hutmutter 11 und des Montagestutzens 12 angepresst. Nach dem Festziehen der Hutmutter 11 ist die Kabelverschraubung 1 und somit der Durchgang durch die Montagewand 9 dicht abgeschlossen.

Dieser Vorgang verläuft besonders vorteilhaft und bequem, wenn das Dichtungsteil 13 an das eingelegte Kabel 8 angepasst ist. Sofern der Durchmesser des Dichtungskanals 130 hingegen wesentlich grösser als der Kabeldurchmesser des Kabels 8 ist, muss die Hutmutter 11 weit nach unten gedreht werden, bis das Dichtungsteil 13 genügend komprimiert und senkrecht zur Durchführungsachse x nach innen und aussen gedehnt ist. Bei Fehlanpassungen trifft die Hutmutter 11 gegebenenfalls auf einen Anschlag, bevor die gewünschte Abdichtung der Kabelverschraubung 1 erreicht ist. Die Kabelverschraubung 1 ist in diesem Fall nicht bequem zu bedienen und erfüllt ihre Funktion gegebenenfalls nicht wie gefordert.

In die erfindungsgemässe Kabelverschraubung 1 kann daher ein Dichtungsteil 13 eingesetzt werden, das optimal an das Kabel 8 angepasst ist und die beschriebenen Probleme vermeidet.

Fig. 1b zeigt die Kabelverschraubung 1 von Fig. 1a mit einem Viertelschnitt mit dem Dichtungselement 13, das einerseits mit einem Oberteil 131 in einen Hutkanal 110 der Hutmutter 11 und andererseits mit einem Unterteil 133 in einen Stutzenkanal 120 des Montagestutzens 12 hineinragt und das auf einem ringförmigen Lagerelement 14 sitzt, das von einem im Stutzenkanal 120 vorgesehenen Stützelement 124 lösbar gehalten ist.

Das Oberteil 131 des Dichtungsteils 13, das einen grösseren Durchmesser als das Unterteil 133 aufweist, ist mit diesem durch ein Übergangsteil 132 verbunden, welches, angepasst an den Querschnittsverlauf des Stutzenkanals 120 konisch ausgebildet ist.

Der Hutkanal 110 der Hutmutter 11, der sich nach oben entlang einer dem Dichtungsteil 13 zugewandten Druckfläche 111 bis zu einer Eintrittsöffnung 118 verjüngt, der Stutzenkanal 120 des Montagestutzens 12, der Dichtungskanal 130 des Dichtungselements 13 und der Lagerkanal 140 des Lagerelements 14 begrenzen den entlang der Durchführungsachse x verlaufenden Durchgangskanal der Kabelverschraubung 1. Der maximale Kabeldurchmesser der in die Kabelverschraubung 1 einführbaren Kabel 8 entspricht dem Durchmesser des Lagerkanals 140 des Lagerelements 14 und zumindest annähernd dem Durchmesser des Dichtungskanals 130 des Dichtungsteils 13.

Das auf dem Stützelement 124 ruhende Lagerelement 14 ist derart ausgestaltet, dass es eine genügende Festigkeit zum Halten des Dichtungselements 13 aufweist. Je nach dem gewählten Fertigungsmaterial, Metall oder Kunststoff, kann das Lagerelement 14 eine geringe Höhe und einen entsprechend kurzen Lagerkanal 140 aufweisen, der zu einer Lageröffnung oder Ringöffnung reduziert ist.

Aufgrund der Festigkeit des Lagerelements 14 kann das Stützelement 124 mit wesentlich reduzierten Abmessungen realisiert werden. Es genügt dabei ein Bruchteil eines Millimeters, um das stabile Lagerelement 14 sicher zu halten.

Das Stützelement 124 kann auf verschiedene Arten vorteilhaft realisiert werden.

Beispielsweise ist vorgesehen, dass das Stützelement 124; 124' eine in den Stutzenkanal 120 hineinragende einteilige oder mehrteilige ringförmige Schulter 124; 124' ist, die vorzugsweise einstückig am Stutzenkanal 120 angeformt oder in den Stutzenkanal 120 eingefräst, eingepresst oder eingedreht ist.

In vorzugsweisen Ausgestaltungen umfasst der Stutzenkanal 120 ein Innengewinde 124''', in den das mit einem Aussengewinde versehene Stützelement 124' (fragmentarisch gezeigt), das vorzugsweise ringförmig oder hülsenförmig ausgebildet ist, so weit eingedreht wird, bis es an das Dichtungsteil 13 angepasst ist.

In weiteren vorzugsweisen Ausgestaltungen umfasst der Stutzenkanal 120 ein Innengewinde, welches selbst das Stützelement 124‴ bildet und welches das in dieser Ausgestaltung mit einem Aussengewinde 143 versehene Lagerelement 14 hält. Das mit einem Aussengewinde 143 versehene vorzugsweise ringförmige Lagerelement 14 kann daher bis zu einer Position im Stutzenkanal 120 eingedreht werden, die an die Abmessungen des Dichtungsteils 13 angepasst ist.

In einer weiteren vorzugsweisen Ausgestaltung ist vorgesehen, dass der Stutzenkanal 120 wenigstens eine Rastsenke, wie eine Ringnut, aufweist, welche das Stützelement 124" bildet und in die das optional mit einem Rastelement 144 versehene Lagerelement 14 einrastbar ist. Die wenigstens eine Rastsenke 124" ist vorzugsweise als Ringnut ausgebildet, in die beispielsweise eine ringförmig verlaufende Rippe 144, die an der Aussenseite des Lagerelements 14 vorgesehen ist, formschlüssig einrastbar ist. Sofern mehrere entlang der Durchführungsachse x gegeneinander verschobene Rastsenken 124" vorgesehen sind, kann das Lagerelement 14 wahlweise an einer passenden Rastsenke 124" eingerastet werden, die entsprechenden Abmessungen des Dichtungsteils 13 gewählt wird. Die ringförmig verlaufende Rippe 144 weist vorzugsweise ein Dreieckprofil mit einer Flanke auf, die es erlaubt, dass Lagerelement 14 in den Stutzenkanal 120 einzuschieben und in eine Rastsenke 124" einzurasten, in der es sicher gehalten ist.

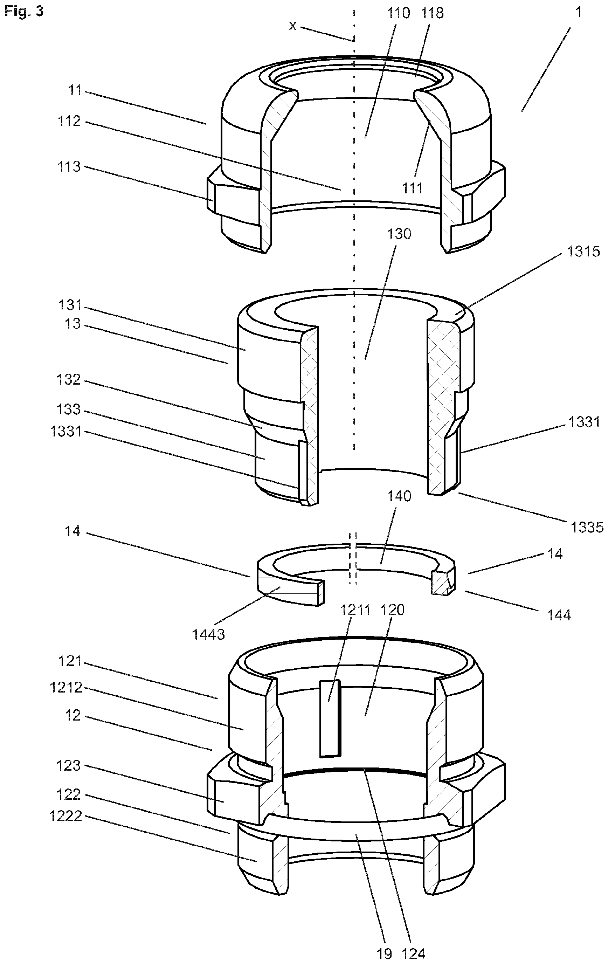

Das in Fig. 1b mit einem Viertelschnitt gezeigte Dichtungsteil 13 wurde mit dem Lagerelement 14 um etwa 10° im Gegenuhrzeigersinn gedreht, um dessen Aussenseite zu zeigen, die eines oder mehrere vorzugsweise gleichmässig beanstandete Formelemente 1331 aufweist, die in dazu komplementäre Formelemente 1211 eingreifen können, die im Stutzenkanal 120 des Montagestutzens 12 vorgesehen sind (siehe Fig. 3), um eine Drehung des Dichtungsteils 13 zu verhindern, wenn die Hutmutter 11 angezogen wird. Das gezeigte Formelement 1331 ist als Rippe am Unterteil 133 angeformt und parallel zur Durchführungsachse x ausgerichtet.

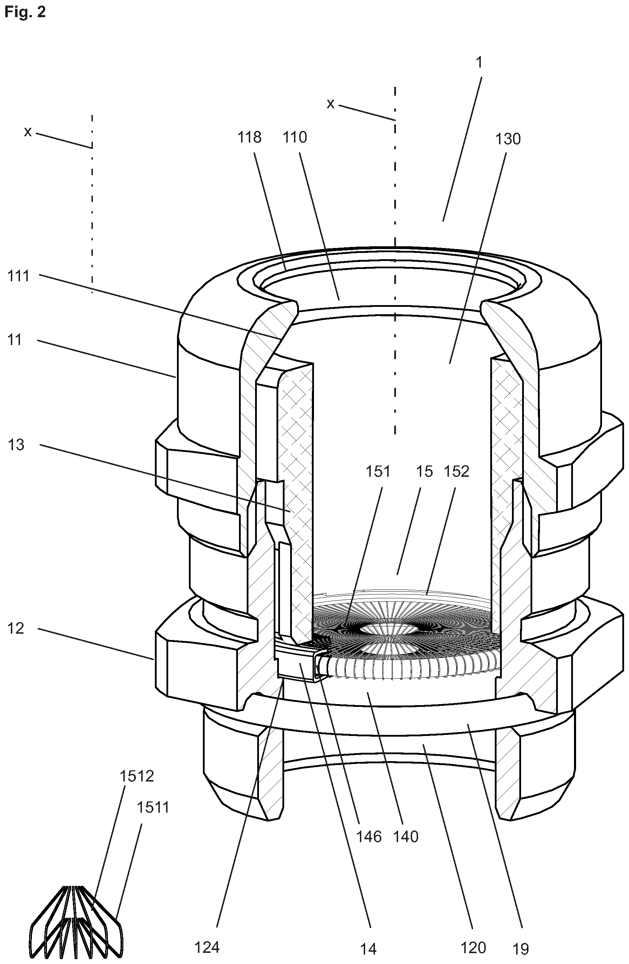

Fig. 2 zeigt die Kabelverschraubung von Fig. 1b mit einem vorzugsweise ausgestalteten Lagerelement 14, das eine Kontaktierungsvorrichtung 15 mit einer Vielzahl von Kontaktelementen 151 hält, die mit Kontaktarmen gegen die Durchführungsachse x weisen und den Lagerkanal 140 zumindest teilweise überdecken. Einige der Kontaktelemente 1511, 1512, die U-förmig ausgebildet sind, sind separat gezeigt. Das ringförmige Lagerelement 14 weist einen U-förmigen Querschnitt und eine der Durchführungsachse x zugewandte Innennut 146 auf. Die Kontaktelemente 151 umschliessen einen elastischen Montagering 152, der in die Innennut 146 eingesetzt wurde und mit den Kontaktelementen 151 darin gefangen ist.

Fig. 3 zeigt die Kabelverschraubung 1 von Fig. 1b in Explosionsdarstellung. Nach der Entnahme des Dichtungsteils 13 ist der Stutzenkanal 120 vollständig freigelegt, sodass eines der nutenförmigen Formelemente 1211 sichtbar ist.

Weiterhin sind Fragmente von unterschiedlich ausgebildeten ringförmigen Lagerelementen 14 gezeigt. Das links gezeigte Lagerelement 14 weist ein Aussengewinde 143 auf. Das rechts gezeigte Lagerelement 14 weist ein einteiliges oder mehrteiliges vorzugsweise ringförmigen Rastelement 144 auf, welches vorzugsweise eine geneigte Flanke aufweist, die es erlaubt, dass derart ausgestaltete Lagerelement 14 in den Stutzenkanal 120 einzuführen und zu komprimieren, bis es in der gewünschten Rastsenke einrasten kann.

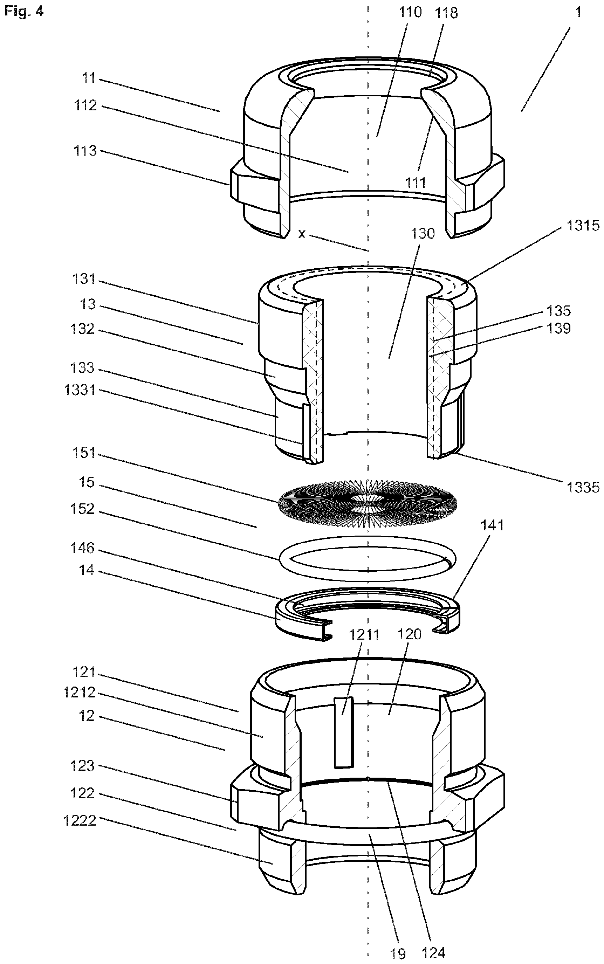

Fig. 4 zeigt die Kabelverschraubung 1 von Fig. 2 in Explosionsdarstellung. Das Dichtungsteil 13 ist in einer bevorzugten Ausgestaltung mit einem optional vorgesehenen Rohrsegment 139 gezeigt, das lösbar ist, um den Dichtungskanal 130 zu erweitern. Das innenliegende Rohrsegment 139 ist einstückig durch wenigstens eine Sollbruchstelle oder Sollbruchlinien oder durch mechanische Verbindungsmittel oder durch Haftstoffe mit dem äusseren Teil des Dichtungsteils 13 verbunden, was durch eine strichpunktierte Linie symbolisiert ist. Es können auch mehrere ineinander liegende Rohrsegmente 133 vorgesehen sein, die wahlweise voneinander gelöst werden können. Alternativ kann das Dichtungsteil 13 von Fig. 3 in die Kabelverschraubung 1 eingesetzt werden oder das Dichtungsteil 13 von Fig. 4 kann in die Kabelverschraubung 1 von Fig. 3 eingesetzt werden.

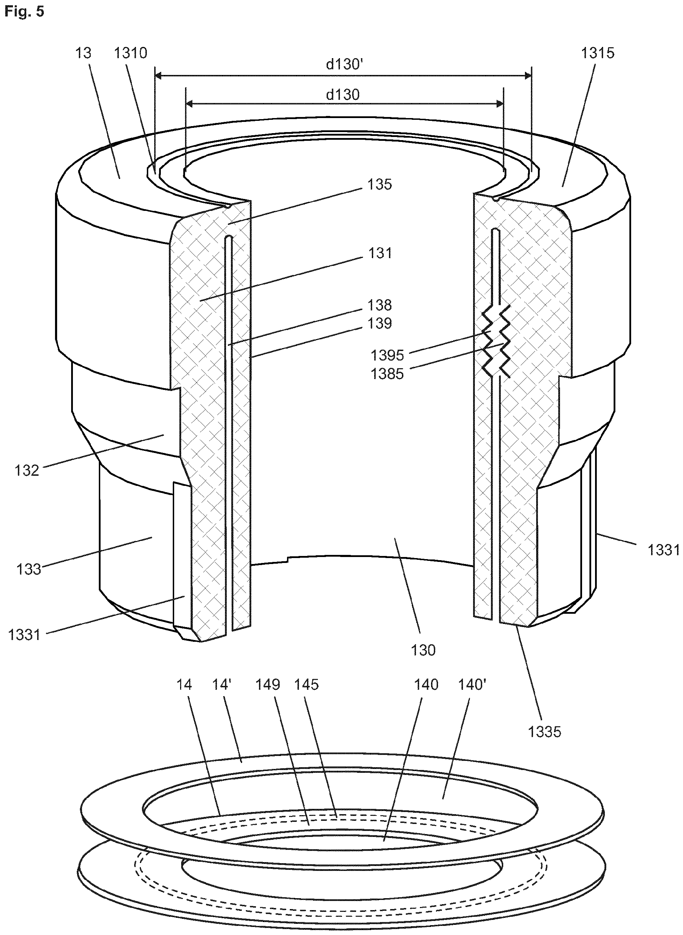

Fig. 5 zeigt das Dichtungselement 13 von Fig. 3 oder Fig. 4 in einer vorzugsweisen Ausgestaltung mit einem lösbar gehaltenen Rohrsegment 139, das den Dichtungskanal 130 umschliesst und das abtrennbar ist, um den Durchmesser d130 des Dichtungskanals 130 zu vergrössern. Nach dem Lösen des Rohrsegments 139 weist der resultierende Dichtungskanals 130 daher einen grösseren Durchmesser d130' auf.

Das Rohrsegment 139 ist durch eine Sollbruchstelle 135 einstückig mit dem Oberteil 131 des Dichtungsteils 13 verbunden und durch einen zylindrischen Einschnitt 138 vom Oberteil 131 und vom Unterteil 133 des Dichtungsteils 13 getrennt. An die wenigstens eine Sollbruchstelle 135 schliesst eine nach aussen freiliegende Arbeitsnut 1310 an, die eine Sollbruchlinie bildet, in die mit einem Werkzeug eingegriffen werden kann, um das Rohrsegment 139 zu lösen.

In vorzugsweisen Ausgestaltungen ist das Rohrsegment 139 durch mechanische Verbindungsmittel, wie Gewindeelemente 1385, 1395 oder weitere formschlüssig ineinander eingreifende Teile mit dem Dichtungselement 13 oder dessen Grundkörper verbunden. Die Gewindeelemente 1385, 1395 verlaufen über die gesamte oder einen Teil der Aussenseite des Rohrsegments 139. In dieser Ausgestaltung kann ein passendes Rohrsegment 139 in das Dichtungsteil 13 eingedreht und bei Bedarf wieder entfernt werden.

Das Rohrsegment 139 kann alternativ oder zusätzlich auch durch Haftstoffe oder Klebstoffe mit dem Dichtungselement 13 verbunden sein. Anstelle der gezeigten einstückig vorgesehen Sollbruchstelle 135 wird beispielsweise wenigstens eine Klebstoffbrücke eingefügt, die in der Folge selbst eine Sollbruchstelle bildet.

Das Rohrsegment 139 erstreckt sich über die gesamte Länge des Dichtungsteils 13, kann aber auch verkürzt sein und beispielsweise nur das Oberteil 131 oder das Unterteil 133 überdecken. Eine weitere Sollbruchstelle 135 kann das Rohrsegment 139 alternativ oder zusätzlich auch mit dem Unterteil 133 des Dichtungselements 13 verbinden.

In vorzugsweisen Ausgestaltungen sind für jede Kabelverschraubung 1 wenigstens zwei Lagerelemente 14 vorgesehen, die Lagerkanäle 140 mit unterschiedlichen Durchmessern aufweisen.

Alternativ kann nur ein Lagerelement 14 vorgesehen sein, das wenigstens eine konzentrisch zur Durchführungsachse x verlaufende Sollbruchlinie 145 aufweist, entlang der ein vorzugsweise ringförmiges Lagersegment 145 vom Lagerelement 14 trennbar ist und dadurch der Durchmesser des Lagerkanals (140) vergrösserbar ist.

In Fig. 5 sind zwei Lagerelemente 14, 14' gezeigt. Das untere Lagerelement 14 ist an die Unterseite des gezeigten Dichtungselements 13 angepasst. Das obere Dichtungsteil 14' wird verwendet, nachdem das gezeigte Rohrsegment 139 entfernt wurde.

Optional ist das untere Lagerelement 14 mit einer Sollbruchlinie 145 versehen, die es erlaubt das innenliegende Lagersegment 149 abzutrennen. Nach der Abtrennung des Lagersegments 149 entspricht das untere Lagerelement 14 dem oberen Lagerelement 14' .

### Bezugszeichenliste

- 1: Kabelverschraubung
- 11: Hutmutter
- 110: Hutkanal
- 111: Druckfläche
- 112: erstes Innengewinde
- 113: Werkzeugangriffselemente
- 12: Montagestutzen
- 120: Stutzenkanal
- 121: erstes Anschlussteil
- 1211: Formelement, vertikale Aufnahmenut
- 1212: erstes Aussengewinde
- 122: zweites Anschlussteil
- 1222: zweites Aussengewinde
- 123: Montageflansch mit Werkzeugangriffsflächen
- 124: Stützelement einstückig an Montagestutzen 12 angeordnet
- 124': Stützelement in den Stutzenkanal 120 eingeführt
- 124": Stützelement als Rastsenke
- 124‴: Stützelement als Innengewinde
- 13: Dichtungselement
- 130: Dichtungskanal
- 131: Oberteil
- 1315: obere Kontaktfläche
- 132: Übergangsteil
- 133: Unterteil
- 1331: Formelement, vertikale Rippe
- 1335: untere Kontaktfläche
- 135: Sollbruchstelle
- 138: zylindrischer Einschnitt
- 139: Rohrsegment
- 14: Lagerelement
- 140: Lageröffnung
- 145: Sollbruchlinie im Lagerelement
- 146: Innennut
- 149: lösbares Lagersegment
- 15: Kontaktierungsvorrichtung
- 151: Kontaktelemente
- 1511: Kontaktelement vereinzelt gezeigt
- 152: Montagering
- 19: Dichtungsring
- 8: Kabel, Leitung oder Rohr
- 9: Montagewand
- d13: Aussendurchmesser des Dichtungsteils 13
- d130: Durchmesser des Dichtungskanals 130
- x: Durchführungsachse

## Patentansprüche

1. Kabelverschraubung (1) mit einer Durchführungsachse (x) zur Durchführung eines Kabels (8) oder einer Leitung entlang der Durchführungsachse (x) durch eine Öffnung in einer Montagewand (9), insbesondere einer Gehäusewand eines elektrischen Geräts oder eines elektrischen Schranks,
mit einem Montagestutzen (12), der mit der Montagewand (9) verbindbar ist, der ein mit einem ersten Aussengewinde (1212) versehenes erstes Anschlussteil (121) und einen der Durchführung des Kabels (8) dienenden Stutzenkanal (120) umfasst,
mit einer Hutmutter (11), die ein Innengewinde (112) und einen der Durchführung des Kabels (8) dienenden Hutkanal (110) aufweist und die auf den Montagestutzen (12) aufschraubbar ist, und
mit einem komprimierbaren Dichtungselement (13), das einen der Durchführung des Kabels (8) dienenden Dichtungskanal (130), ein Oberteil (131), das nach oben in den Hutkanal (110) hineinragt, und ein Unterteil (133), das nach unten in den Stutzenkanal (120) hineinragt, umfasst,
**dadurch gekennzeichnet, dass** im Stutzenkanal (120) wenigstens ein Stützelement (124, 124') vorgesehen ist, von dem ein scheibenförmiges oder ringförmiges Lagerelement (14) lösbar gehalten ist, das einen der Durchführung des Kabels (8) dienenden Lagerkanal (140) aufweist und auf dem das Unterteil (133) des Dichtungselements (13) sitzt.

2. Kabelverschraubung (1) nach Anspruch 1, **dadurch gekennzeichnet,**
a) **dass** das Stützelement (124) eine in den Stutzenkanal (120) hineinragende einteilige oder mehrteilige ringförmige Schulter (124) ist; oder
b) **dass** der Stutzenkanal (120) ein Innengewinde (1201) aufweist, in welches das mit einem Aussengewinde versehene Stützelement (124), das vorzugsweise ringförmig oder hülsenförmige ausgebildet ist, eingedreht ist; oder
c) **dass** der Stutzenkanal (120) ein Innengewinde (1201) aufweist, welches das Stützelement (124) bildet und welches das mit einem Aussengewinde (143) versehene Lagerelement (14) hält; oder
d) **dass** der Stutzenkanal (120) wenigstens eine Rastsenke, wie eine Ringnut, aufweist, welche das Stützelement (124") bildet und in die das mit einem Rastelement (144) versehene Lagerelement (14) einrastbar ist.

3. Kabelverschraubung (1) nach Anspruch 1 oder 2, **dadurch gekennzeichnet, dass** das Lagerelement (14) aus Metall oder einem thermoplastischen Kunststoff, vorzugsweise Polyethylen PE, Polyoxymethylene POM, oder einem Polyamid, wie PA6, gefertigt ist.

4. Kabelverschraubung (1) nach Anspruch 1, 2 oder 3, **dadurch gekennzeichnet, dass** der Aussendurchmesser des Lagerelements (14) zumindest annähernd dem Durchmesser des Stutzenkanals (120) entspricht und dass der Durchmesser der Lageröffnung (140) des Lagerelements (14) zumindest annähernd dem Durchmesser des Dichtungskanals (130) des Dichtungselements (13) entspricht.

5. Kabelverschraubung (1) nach einem der Ansprüche 1 - 4,
**dadurch gekennzeichnet,**
a) **dass** für jede Kabelverschraubung (1) wenigstens zwei Lagerelemente (14) vorgesehen sind, die Lagerkanäle (140) mit unterschiedlichen Durchmessern aufweisen; oder
b) **dass** das Lagerelement (14) wenigstens eine konzentrisch zur Durchführungsachse verlaufende Sollbruchlinie (145) aufweist, entlang der ein vorzugsweise ringförmiges Lagersegment (149) des Lagerelements (14) abtrennbar ist.

6. Kabelverschraubung (1) nach einem der Ansprüche 1 - 5, **dadurch gekennzeichnet, dass** das Dichtungselement (13) wenigstens ein lösbar gehaltenes Rohrsegment (139) umfasst, das den Dichtungskanal (130) umschliesst und das abtrennbar ist, um den Durchmesser des Dichtungskanals (130) zu vergrössern.

7. Kabelverschraubung (1) nach Anspruch 6, **dadurch gekennzeichnet,**
a) **dass** das wenigstens eine Rohrsegment (139) durch wenigstens eine Sollbruchstelle (135) einstückig mit dem Oberteil (131) und/oder mit dem Unterteil (133) verbunden und durch einen zylindrischen Einschnitt (138) vom Oberteil (131) und/oder vom Unterteil (133) getrennt ist, oder
b) **dass** das wenigstens eine Rohrsegment (139) durch mechanische Verbindungsmittel, wie ein Gewinde oder weitere formschlüssig ineinander eingreifende Teile mit dem Dichtungselement (13) verbunden ist, und/oder
c) **dass** das wenigstens eine Rohrsegment (139) durch Haftstoffe oder Klebstoffe mit dem Dichtungselement (13) verbunden ist.

8. Kabelverschraubung (1) nach Anspruch 6 oder 7, **dadurch gekennzeichnet, dass** sich das Rohrsegment (139) über die gesamte Länge oder nur über einen Teil der Länge des Dichtungselements (13) erstreckt.

9. Kabelverschraubung (1) nach Anspruch 7 oder 8, **dadurch gekennzeichnet, dass** an die wenigstens eine Sollbruchstelle (135) eine nach aussen freiliegende Arbeitsnut (1310) anschliesst, die eine Sollbruchlinie bildet.

10. Kabelverschraubung (1) nach einem der Ansprüche 1 - 9, **dadurch gekennzeichnet, dass** das Dichtungselement (13) aus Silikon, Kautschuk, Gummi, einem Elastomermaterial, einem thermoplastischen Elastomermaterial oder einem elastischen Kunststoffmaterial gefertigt ist.

11. Kabelverschraubung (1) nach einem der Ansprüche 1 - 10, **dadurch gekennzeichnet, dass** das Dichtungselement (13) an dem der Hutmutter (11) zugewandten Ende des Oberteils (131) eine obere Kontaktfläche (1315), die an einer sich nach aussen verjüngenden Druckfläche (111) des Hutkanals (110) anliegt, und an dem dem Montagestutzen (12) zugewandten Ende des Unterteils (133) eine untere Kontaktfläche (1335), die am Lagerelement (14) anliegt, aufweist.

12. Kabelverschraubung (1) nach einem der Ansprüche 1 - 11, **dadurch gekennzeichnet, dass** das Unterteil (133) des Dichtungselements (13) an der Aussenseite mit wenigstens einem ersten Formelement (1331), vorzugsweise einer Aufnahmenut oder einer Rippe, versehen ist, die zu einem zweiten Formelement (1211) korrespondiert, das an der Innenseite des Stutzenkanals (120) vorgesehen ist.

13. Kabelverschraubung (1) nach einem der Ansprüche 1 - 12, **dadurch gekennzeichnet, dass** das Oberteil (131) des Dichtungselements (13) einen grösseren Aussendurchmesser aufweist als das Unterteil (133) des Dichtungselements (13) und dass das Oberteil (131) und das Unterteil (133) durch ein Übergangsteil (132), welches sich vom Oberteil (131) zum Unterteil (133) verjüngt, miteinander verbunden sind.

14. Kabelverschraubung (1) nach einem der Ansprüche 1 - 13, **dadurch gekennzeichnet, dass** das Lagerelement (14) eine Vielzahl von Kontaktelementen (151) hält, die vorzugsweise U-förmig ausgebildet sind und einen Haltering (152), der in einer gegen die Durchführungsachse (x) geöffneten Innennut (145) des Lagerelements (14) angeordnet ist, einseitig umschliessen und mit Kontaktarmen die Durchführungsachse (x) ausgerichtet sind.

15. Dichtungselement (5) für eine Kabelverschraubung (1) nach einem der Ansprüche 1-14 mit wenigstens einem lösbar gehaltenen Rohrsegment (139), das den Dichtungskanal (130) umschliesst und das abtrennbar ist, um den Durchmesser des Dichtungskanals (130) zu vergrössern.
